# EUROPEAN PATENT APPLICATION

(11) **EP 2 485 559 A1**
(43) Date of publication of application: **08.08.2012**
(21) Application number: 10818926.7
(22) Date of filing: 28.09.2010
(51) Int. Cl.: H04W 76/00

(54) **TERMINAL DEVICE AND COMMUNICATION METHOD**

(30) Priority: 28.09.2009 JP 2009222367
(71) Applicant: NTT DOCOMO, INC., Chiyoda-ku Tokyo 100-6150 (JP); Panasonic Mobile Communications Co., Ltd., Yokohama-shi Kanagawa 224-8539 (JP); NEC Corporation, Tokyo 108-8001 (JP)
(72) Inventor: HIMENO, Hiromi, Tokyo 100-6150 (JP); KANAUCHI, Masashi, Tokyo 100-6150 (JP); IDA, Takehiro, Tokyo 100-6150 (JP); SUZUKI, Masaaki, Osaka 540-6207 (JP); NAKAJIMA, Taketoshi, Tokyo 108-8001 (JP)
(74) Representative: HOFFMANN EITLE
(86) International application number: PCT/JP2010/066825
(87) International publication number: WO 2011/037256

(57) **Abstract**

A terminal device (100) is provided with a C-PLANE processing unit (131) which sets an RRC connection between the terminal device and a radio station (200), and sets an RAB and a PDP context between the terminal device and a network (300), and a U-PLANE processing unit (132) which performs processing for transmitting user data using the PDP context set by the C-PLANE processing unit (131). The C-PLANE processing unit (131) performs local release for releasing the PDP context in the terminal device when the transmission of the user data has failed in a preservation state.

## Description

### TECHNICAL FIELD

The present invention relates to a terminal device connected to a network via a radio station, and a communication method.

### BACKGROUND ART

Conventionally, there is known a terminal device including a U-PLANE processing unit that performs the transmission process or the reception process of user data, and a C-PLANE processing unit that performs the transmission process or the reception process of control data.

The terminal device is connected to a core network via a radio station (for example, RNC) such as a base station or a radio network controller. The core network includes SGSN (Serving GPRS Support Node) for performing packet switching, GGSN (Gateway GPRS Support Node) for connecting the core network to another network (for example, the Internet network), and the like.

Here, when communication is performed by packet switching (PS), the terminal device sets a radio path such as an RRC connection between the terminal device and the radio station. Furthermore, the terminal device sets RAB (Radio Access Bearer) between the terminal device and the network-side (the SGSN). Next, the terminal device sets a logical path such as a PDP context between the terminal device and the network-side (the GGSN).

In order to effectively use a radio resource in a period for which packet transfer is not performed, there is known a technology of allowing the transition of the terminal device and the network to a state (a Preservation state) in which the PDP context is maintained and the RAB is released. Since the PDP context is maintained in the terminal device and the network, when returning to a PS communication state from the Preservation state is performed, a transition time required for returning to the PS communication state is reduced (for example, Non-Patent Document 1).

In the above-mentioned background technology, when the terminal device attempts to transmit user data in the Preservation state, even when the transmission of user data fails, the Preservation state is maintained. A factor (hereinafter, referred to as a failure factor), by which the transmission of the user data fails, includes: (1) a state in which the transmission of the user data is restricted (a restriction state); (2) a state in which the terminal device is located out of a service area (an out-of-service state); (3) a state in which an emergency call has occurred (an emergency call state); (4) time-out of a response wait timer corresponding to a return request to a communication state (a time-out state); and (5) a state in which response rejection for the return request to the communication state is received (a return rejection state). Hereinafter, (1) to (5) are generically referred to as a restriction state.

Here, the terminal device is generally configured by using TE (Terminal Equipment) and MT (mobile Terminal). The U-PLAN processing unit and the C-PLANE processing unit are provided in the MT. The TE requests the MT to transmit the user data. In addition, it will be appreciated that the TE and the MT independently operate.

In the background technology, when the TE requests to transmit the user data in the Preservation state, the restriction state and the like, the transmission of the user data fails; but the TE does not recognize a failure factor. Therefore, since the TE does not recognize the actual failure factor but recognizes that the transmission of the user data fails, the transmission of the user data may be attempted again.

As described above, in the background technology, the transmission process of the user data may be unnecessarily repeated in the Preservation state.

### PRIOR ART DOCUMENT

### NON-PATENT DOCUMENT

Non-Patent Document 1: 3GPP TS23.060 "General Packet Radio Service (GPRS); Service description; Stage 2", chapter 9.2

### SUMMARY OF THE INVENTION

In a feature of the present invention, a terminal device connected to a network via a radio station, includes: a control data processing unit (C-PLANE processing unit 131) configured to set a control data radio path (RRC connection) required for transmission and reception of control data between the terminal device and the radio station, and set a user data radio path (RAB) and a logical path (PDP context) required for transmission and reception of user data between the terminal device and the network; and a user data processing unit (U-PLANE processing unit 132) configured to perform a transmission process of the user data using the logical path set by the control data processing unit. The control data processing unit performs a local release for releasing the logical path in the terminal device, when the transmission of the user data fails in a preservation state in which the logical path is maintained and the user data radio path is released.

In the feature described above, the terminal device further includes: a determination unit configured to determine whether to perform the local release according to a type of the network. The control data processing unit maintains the preservation state without performing the local release, even when the transmission of the user data fails in the preservation state, if it is determined that the local release is not performed.

In the feature described above, the control data processing unit performs the local release, if a control data radio path corresponding to an emergency call is set as the control data radio path of another communication different from communication transited to the preservation state, when a transmission request of the user data is made in the preservation state.

In a feature of the present invention, a communication method, in which a terminal device is connected to a network via a radio station, includes: a step A of setting a control data radio path required for transmission and reception of control data between the terminal device and the radio station, and setting a user data radio path and a logical path required for transmission and reception of user data between the terminal device and the network; and a step B of performing a local release for releasing the logical path in the terminal device, when the transmission of the user data fails in a preservation state in which the logical path is maintained and the user data radio path is released.

### BRIEF DESCRIPTION OF THE DRAWINGS

[Fig. 1] Fig. 1 is a diagram illustrating the configuration of a communication system according to a first embodiment.
[Fig. 2] Fig. 2 is a diagram illustrating the configuration of a terminal device 100 according to the first embodiment.
[Fig. 3] Fig. 3 is a sequence diagram illustrating an operation of the communication system according to the first embodiment.
[Fig. 4] Fig. 4 is a sequence diagram illustrating an operation of the communication system according to the first embodiment.
[Fig. 5] Fig. 5 is a sequence diagram illustrating an operation of the communication system according to the first embodiment.
[Fig. 6] Fig. 6 is a sequence diagram illustrating an operation of the communication system according to the first embodiment.
[Fig. 7] Fig. 7 is a sequence diagram illustrating an operation of the communication system according to the first embodiment.
[Fig. 8] Fig. 8 is a sequence diagram illustrating an operation of the communication system according to the first embodiment.
[Fig. 9] Fig. 9 is a sequence diagram illustrating an operation of the communication system according to the first embodiment.

### MODES FOR CARRYING OUT THE INVENTION

Hereinafter, a communication system according to an embodiment of the present invention will be described with reference to the accompanying drawings. It is noted that in the following description of the drawings, identical or similar numerals are assigned to identical or similar parts.

It will be appreciated that the drawings are schematically shown and the ratio and the like of each dimension are different from the real ones. Accordingly, specific dimensions should be determined in consideration of the explanation below. Moreover, among the drawings, the respective dimensional relations or ratios may be different from each other.

### [First Embodiment]

### (Configuration of Communication System)

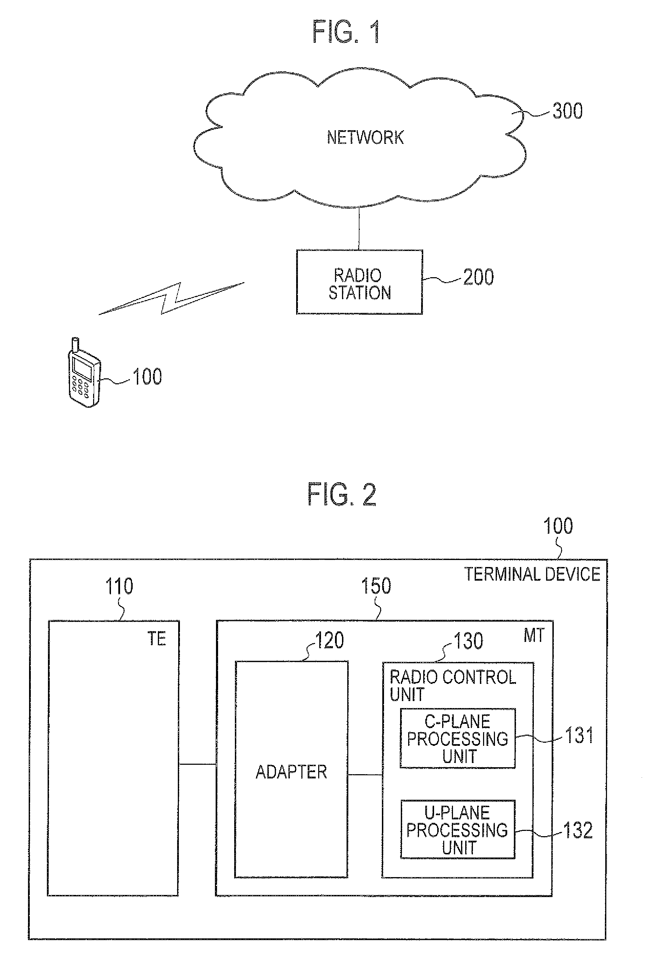

Hereinafter, the configuration of a communication system according to a first embodiment will be described with reference to the accompanying drawing. Fig. 1 is a diagram illustrating the configuration of the communication system according to the first embodiment. As illustrated in Fig. 1, the communication system includes a terminal device 100, a radio station 200, and a network 300.

The terminal device 100 is a terminal having a radio communication function and may be a cellular phone, a PDA, a personal computer and the like. The terminal device 100 performs PS (Packet Switching) communication and CS (Circuit Switching) communication with the network 300 via the radio station 200.

In addition, the PS communication is performed by packet switching and the CS communication is performed by circuit switching. Hereinafter, it will be appreciated that a configuration required for the PS communication will be mainly described.

The radio station 200 includes a base station (BTS), a radio network controller (RNC) and the like. The following description will be given on the assumption that the radio station 200 is the RNC. However, the present invention is not limited thereto.

Between the terminal device 100 and the radio station 200, a control data radio path such as an RRC connection is set. The RRC connection is a path required for the transmission and reception of control data.

The network 300 performs the PS communication and the CS communication with the terminal device 100 via the radio station 200. The network 300 includes a switch (MSC, SGSN), a gateway (GGSN) and the like.

Between the terminal device 100 and the network 300 (for example, SGSN), a user data radio path such as RAB (Radio Access Bearer) is set. Here, the RAB is a path required for the transmission and reception of user data.

### (Configuration of Terminal Device)

Hereinafter, the configuration of the communication system according to the first embodiment will be described with reference to the accompanying drawing. Fig. 2 is a diagram illustrating the configuration of the terminal device 100 according to the first embodiment.

As illustrated in Fig. 2, the terminal device 100 includes a TE 110 (Terminal Equipment) and an MT 150 (Mobile Terminal).

The TE 110 has a function of inputting and outputting data, for example. Specifically, the TE 110 outputs an outgoing call request of the PS communication or the CS communication to the MT 150. The TE 110 outputs user data related to the PS communication or the CS communication to the MT 150.

The MT 150 has a function of performing the PS communication and the CS communication. Specifically, the MT 150 includes an adapter 120 and a radio control unit 130.

The adapter 120 is an interface between the TE 110 and the radio control unit 130. Specifically, the adapter 120 relays an outgoing call request from the TE 110, user data and the like to the radio control unit 130.

The radio control unit 130 includes a C-PLANE processing unit 131 (a control data processing unit) and a U-PLANE processing unit 132 (a user data processing unit), and operates independently of the TE 110.

The C-PLANE processing unit 131 performs a process for transmitting control data to the radio station 200 or the network 300, and a process for receiving control data from the radio station 200 or the network 300.

Specifically, the C-PLANE processing unit 131 sets the control data radio path such as the RRC connection between the terminal device 100 and the radio station 200. As described above, the RRC connection is a path required for the transmission and reception of the control data.

The C-PLANE processing unit 131 sets the user data radio path such as the RAB (Radio Access Bearer) between the terminal device 100 and the network 300 (for example, the SGSN). As described above, the RAB is a path required for the transmission and reception of the user data.

The C-PLANE processing unit 131 sets a logical path (a PDP context) required for the transmission and reception of the user data between the terminal device 100 and the network 300 (for example, the GGSN).

The PDP context includes a PDP type indicating the type of PDP (Packet Data Protocol), a PDP address for identifying the PDP, APN (Access Point Name), a QoS (Quality of Service) profile and the like.

Here, the C-PLANE processing unit 131 recognizes the state of the terminal device 100 through the transmission process and the reception process of the control data. The state of the terminal device 100 includes a standby state (an Idle state), a preservation state, a PS communication state and the like.

The standby state (the Idle state) indicates a state in which a radio path and a logical path are not set between the terminal device 100 and the radio station 200 and between the terminal device 100 and the network 300. That is, in the standby state (the Idle state), the RAB and the PDP context are not set.

The preservation state indicates a state in which the user data radio path is released and the logical path is maintained. That is, in the preservation state, the RAB is released and the PDP context is maintained. Here, in the preservation state, it is possible to consider a case (1) in which the RRC connection is not set between the terminal device 100 and the radio station 200, and a case (2) in which the RRC connection is set between the terminal device 100 and the radio station 200. For example, in a case in which no call exists other than the preservation state, the RRC connection is not set. Furthermore, in a case in which there exists a call other than a call in the preservation state (for example, a case in which the CS communication, other than the PS communication, is performed), the RRC connection is set.

In the PS communication state, the RRC connection is set between the terminal device 100 and the radio station 200, and the RAB and the PDP context are set between the terminal device 100 and the network 300. That is, in the PS communication state, the RAB and the PDP context are set.

Furthermore, the state of the terminal device 100 includes a PS communication limitation state in which the transmission of user data is limited. The PS communication limitation state includes: (1) a state in which the transmission of user data is restricted (a restriction state); (2) a state in which the terminal device 100 is located out of a service area (an out-of-service state); (3) a state in which an emergency call has occurred (an emergency call state); (4) time-out of a response wait timer corresponding to a return request to a communication state (a time-out state); and (5) a state in which response rejection for the return request to the communication state is received (a return rejection state).

The U-PLANE processing unit 132 performs the transmission process and the reception process of the user data by using the RAB and the PDP context set by the C-PLANE processing unit 131.

Specifically, when the terminal device 100 is in the PS communication state, it is possible for the U-PLANE processing unit 132 to perform the transmission process of the user data.

When the terminal device 100 is in the preservation state, if the RAB is set by the C-PLANE processing unit 131, it is possible for the U-PLANE processing unit 132 to start the transmission process and the reception process of the user data.

When the terminal device 100 is in the Idle state, if the RAB and the PDP context are not set by the C-PLANE processing unit 131, it is not possible for the U-PLANE processing unit 132 to start the transmission process of the user data.

In addition to the above-mentioned processes, the radio control unit 130 performs a spreading process, a modulation process, a synchronization process, a transmission power control process and the like.

### (Operation of terminal device)

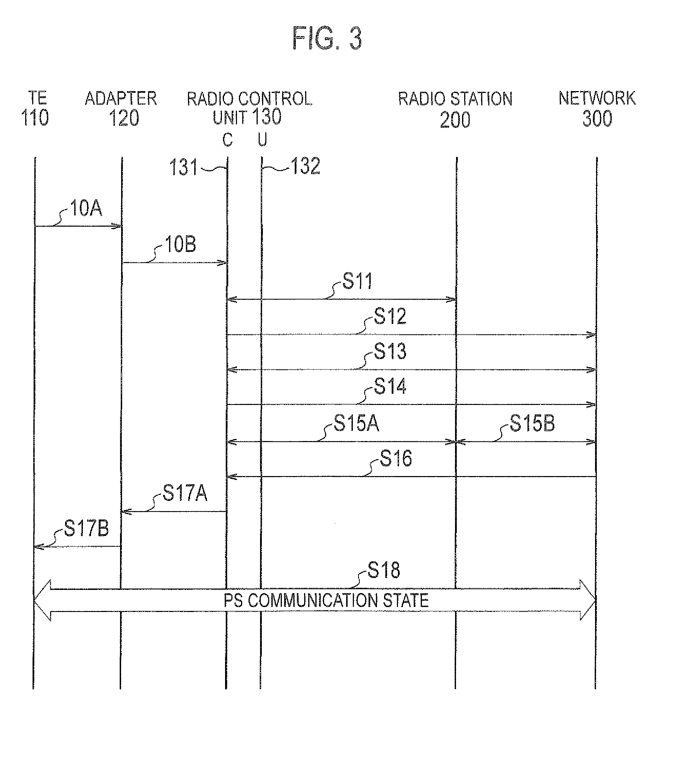

I-iereinafter, the schematic operation of the terminal device according to the first embodiment will be described. In addition, the operation of the communication system including the operation of the terminal device will be described later (refer to Fig. 3 to Fig. 9).

As described above, it is possible for the U-PLANE processing unit 132 to attempt to transmit the user data in the preservation state.

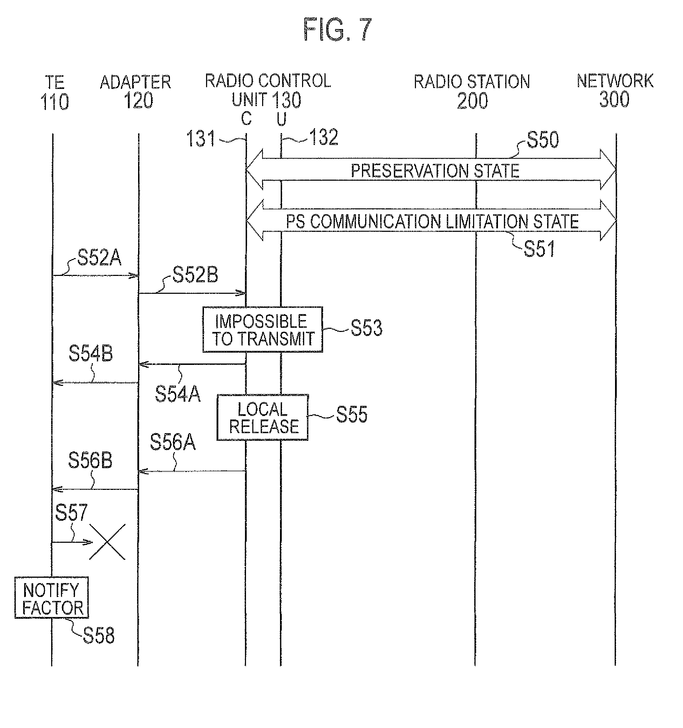

When the transmission of the user data fails in the preservation state, the C-PLANE processing unit 131 performs local release for releasing the PDP context in the terminal device 100. Next, the C-PLANE processing unit 131 notifies the TE 110 that the local release of the PDP context is performed via the adapter 120 (refer to Fig. 7 to Fig. 9).

Furthermore, the C-PLANE processing unit 131 notifies a user (the TE 110) of a factor (a failure factor), by which the transmission of the user data fails in the preservation state, via the adapter 120 (refer to Fig. 7 to Fig. 9).

The failure factor includes: (1) transmission of a transmission request of user data to the network 300-side being limited; (2) not being able to acquire a response for the transmission request of the user data in a predetermined time; (3) being able to acquire a response rejecting to transmit the user data for the transmission request of the user data; (4) being time-out of a response wait timer corresponding to a return request to a communication state; and (5) receiving a response rejection for the return request to the communication state.

### (Operation of communication system)

Hereinafter, the operation of the communication system according to the first embodiment will be described with reference to the accompanying drawings. Fig. 3 to Fig. 9 are sequence diagrams illustrating the operation of the communication system according to the first embodiment.

### (PS communication start process)

Hereinafter, the PS communication start process according to the first embodiment will be described with reference to Fig. 3.

In step 10A, the TE 110 transmits an outgoing call request to the adapter 120. In step 10B, the adapter 120 transmits the outgoing call request to the radio control unit 130 (the C-PLANE processing unit 131).

In step 11, the radio control unit 130 (the C-PLANE processing unit 131) sets an RRC connection for transmitting and receiving control data between the terminal device 100 and the radio station 200 (RRC Connection Establishment).

In step 12, the radio control unit 130 transmits a service request to the network 300 (the GGSN).

In step 13, the network 300 authenticates the terminal device 100 based on subscription information stored in SIM (USIM) and the like provided in the terminal device 100. Next, the network 300 shares an encryption key and the like, which are used between the terminal device 100 and the network 300, with the terminal device 100.

In step 14, the radio control unit 130 (the C-PLANE processing unit 131) transmits the outgoing call request to the network 300 (the SGSN). Specifically, the C-PLANE processing unit 131 transmits a PDP context activation request (Activate PDP Context Request) to the network 300. In addition, the PDP context activation request includes QoS information required for communication of user data, and the like.

In step 15A and step 15B, RAB is set between the terminal device 100 and the network 300 (the SGSN).

In step 16, the network 300 (the SGSN) sets a PDP context therein and transmits an outgoing call response to the radio control unit 130 (the C-PLANE processing unit 131). Specifically, the network 300 transmits a PDP context activation response (Activate PDP Context Accept) to the C-PLANE processing unit 131.

As described above, the processes of step 12 to step 16 are performed, so that the PDP context is set between the terminal device 100 and the network 300 (the GGSN).

In step 17A, the radio control unit 130 (the C-PLAN processing unit 131) transmits an outgoing call response to the adapter 120. In step 17B, the adapter 120 transmits the outgoing call response to the TE 110.

In step 18, the transmission or reception of user data is possible between the terminal device 100 and the network 300 (the GGSN) (the PS communication state).

### (Transition to Preservation state from PS communication state)

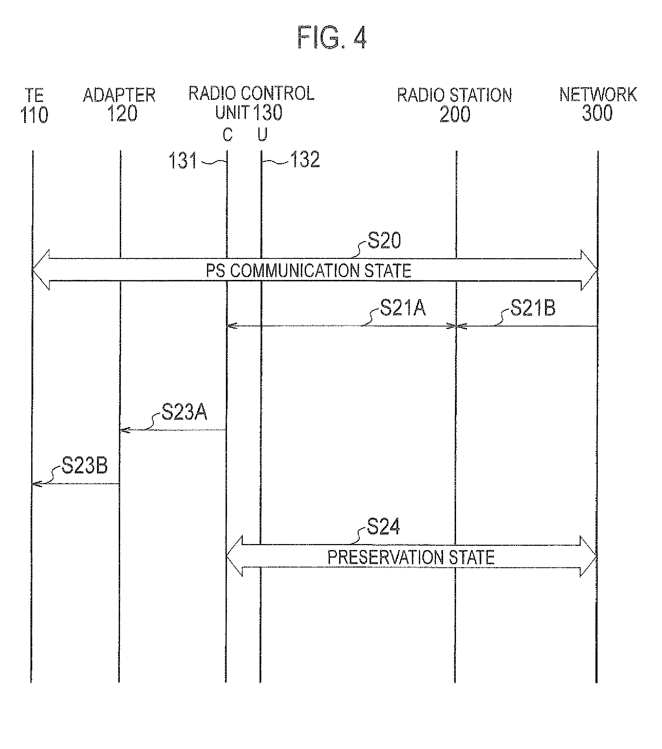

Hereinafter, a transition to the Preservation state from the PS communication state according to the first embodiment will be described with reference to Fig. 4.

As illustrated in Fig. 4, in step 20, the transmission or reception of the user data is possible between the terminal device 100 and the network 300 (the GGSN) (the PS communication state).

In step 21A and step 21B, RAB is released between the terminal device 100 and the network 300 (the SGSN).

In step 23A, the radio control unit 130 (the C-PLANE processing unit 131) notifies the adapter 120 of the transition to the Preservation state. In step 23B, the adapter 120 notifies the TE 110 of the transition to the Preservation state. In addition, the adapter 120 may not notify the TE 110 of the transition to the Preservation state.

In step 24, the terminal device 100 and the network 300 transits to the Preservation state from the PS communication state.

### (Transition to PS communication state from Preservation state)

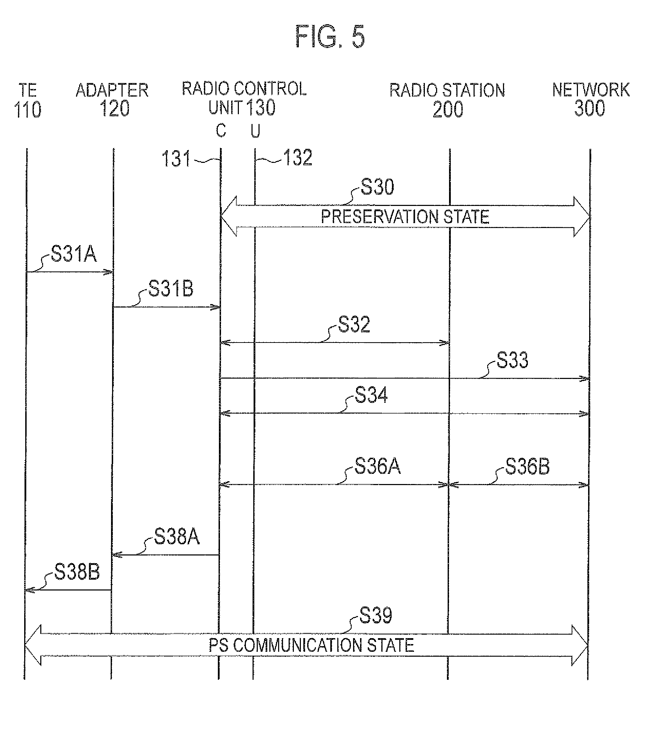

Hereinafter, a transition to the PS communication state from the Preservation state according to the first embodiment will be described with reference to Fig. 5.

As illustrated in Fig. 5, in step 30, the terminal device 100 and the network 300 are in the Preservation state in which the PDP context is maintained and the RAB is released.

In step 31A, the TE 110 transmits a transmission request of user data to the adapter 120. In step 31B, the adapter 120 transmits the transmission request of the user data to the radio control unit 130 (the C-PLANE processing unit 131).

In step 32, the radio control unit 130 (the C-PLANE processing unit 131) sets the RRC connection for transmitting and receiving control data between the terminal device 100 and the radio station 200 (RRC Connection Establishment), similarly to step 11.

In step 33, the radio control unit 130 (the C-PLANE processing unit 131) transmits a service request to the network 300 (the GGSN), similarly to step 12.

In step 34, the network 300 authenticates the terminal device 100 based on subscription information stored in SIM (USIM) and the like provided in the terminal device 100, similarly to step 13. Next, the network 300 shares an encryption key and the like, which are used between the terminal device 100 and the network 300, with the terminal device 100.

In step 36A and step 36B, the RAB is set between the terminal device 100 and the network 300 (the SGSN).

As described above, it is not necessary to perform the processes (step 14 and step 16) for setting the PDP context, that is, the procedure of the PDP context activation request and response, and an existing PDP context is activated by the processes of step 33, step 34, step 36A, and step 36B. Furthermore, by the processes of step 33, step 34, step 36A, and step 36B, the PDP context is set between the terminal device 100 and the network 300 (the GGSN).

In step 38A, the radio control unit 130 (the C-PLANE processing unit 131) transmits an outgoing call response to the adapter 120, similarly to step 17A. In step 38B, the adapter 120 transmits the outgoing call response to the TE 110, similarly to step 17B.

In step 39, the transmission or reception of user data is possible between the terminal device 100 and the network 300 (the GGSN) (the PS communication state).

### (Transition to Idle state from Preservation state)

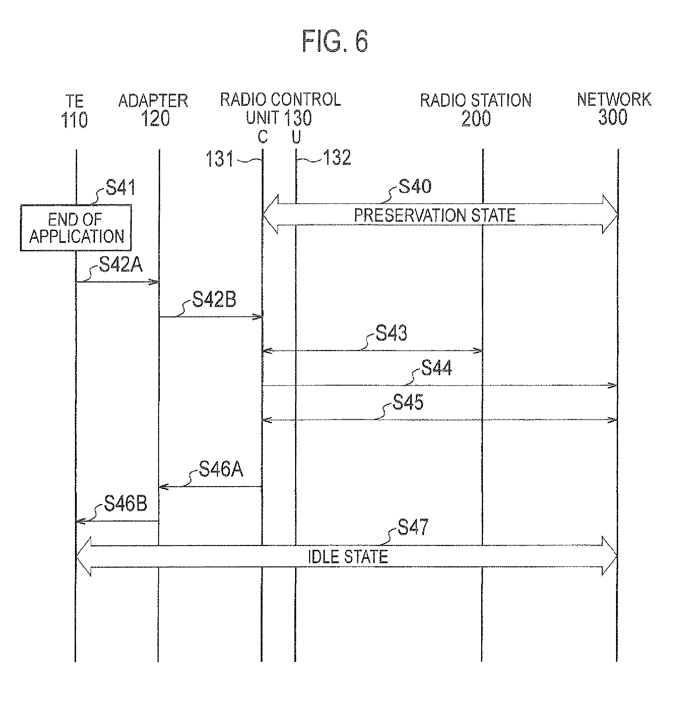

Hereinafter, a transition to the Idle state from the Preservation state according to the first embodiment will be described with reference to Fig. 6.

As illustrated in Fig. 6, in step 40, the terminal device 100 and the network 300 are in the Preservation state in which the PDP context is maintained and the RAB is released.

In step 41, the TE 110 completes an application that transmits and receives the user data.

In step 42A, the TE 110 transmits an application completion notification to the adapter 120. In step 42B, the adapter 120 transmits the application completion notification to the radio control unit 130 (the C-PLANE processing unit 131).

In step 43, the radio control unit 130 (the C-PLANE processing unit 131) sets the RRC connection between the terminal device 100 and the network 300 (RRC Connection Establishment), similarly to step 11.

In step 44, the radio control unit 130 (the C-PLANE processing unit 131) transmits a PDP context deactivation request (Deactivate PDP Context Request) to the network 300 (the SGSN).

In step 45, the network 300 (the SGSN) deactivates the PDP context and transmits a PDP context deactivation completion (Deactivate PDP Context Accept) to the radio control unit 130 (the C-PLANE processing unit 131).

In step 46A, the radio control unit 130 (the C-PLAN processing unit 131) notifies the adapter 120 of the transition to the Idle state. In step 46B, the adapter 120 notifies the TE 110 of the transition to the Idle state.

In step 47, the terminal device 100 transits to the Idle state in which the RAB or the PDP context is released.

### (Impossibility of transmission of transmission request)

Hereinafter, the case, where it is not possible to transmit a transmission request of user data to the network 300 when the radio control unit 130 according the first embodiment is in the Preservation state and the PS communication limitation state, will be described with reference to Fig. 7. In Fig. 7, the PS communication limitation state includes: (1) a state in which the transmission of user data is restricted (a restriction state); (2) a state in which the terminal device is located out of a service area (an out-of-service state); and (3) a state in which an emergency call has occurred (an emergency call state).

As illustrated in Fig. 7, in step 50, the terminal device 100 and the network 300 are in the Preservation state in which the PDP context is maintained and the RAB is released.

In step 51, the transmission of the user data is limited between the terminal device 100 and the network 300. The terminal device 100 and the network 300 transit to the Preservation state and the PS communication limitation state.

In step 52A, the TE 110 transmits the transmission request of the user data to the adapter 120. In step 52B, the adapter 120 transmits the transmission request of the user data to the radio control unit 130 (the C-PLANE processing unit 131).

In step 53, the radio control unit 130 (the C-PLANE processing unit 131) detects that the transmission of the transmission request of the user data to the network 300-side is limited.

In step 54A, the radio control unit 130 (the C-PLANE processing unit 131) transmits a transmission request response indicating the impossibility of the transmission of the user data to the adapter 120. In step 54B, the adapter 120 transmits the transmission request response indicating the impossibility of the transmission of the user data to the TE 110.

In step 55, the radio control unit 130 (the C-PLANE processing unit 131) releases the PDP context in the terminal device 100 (local release). Thus, a transition to the Idle state from the Preservation state is performed in the terminal device 100.

In step 56A, the radio control unit 130 (the C-PLAN processing unit 131) transmits the completion of the local release in the terminal device 100, that is, the transition to the Idle state, to the adapter 120. In step 54B, the adapter 120 transmits the completion of the local release in the terminal device 100, that is, the transition to the Idle state, to the TE 110.

Here, when the transmission of the user data is newly attempted, since the PDP context is not set, it is not possible for the TE 110 to issue the transmission request of the user data (refer to step 57). That is, it is necessary for the TE 110 to re-issue the outgoing call request of the user data.

In step 58, the TE 110 notifies a user of a factor (a failure factor) by which the transmission of the transmission request of the user data fails. Here, the failure factor indicates that the transmission of the transmission request of the user data to the network 300-side is limited. That is, the failure factor includes: (1) a state in which the transmission of user data is restricted (a restriction state); (2) a state in which the terminal device is located out of a service area (an out-of-service state); and (3) a state in which an emergency call has occurred (an emergency call state).

### (Time-out of transmission request)

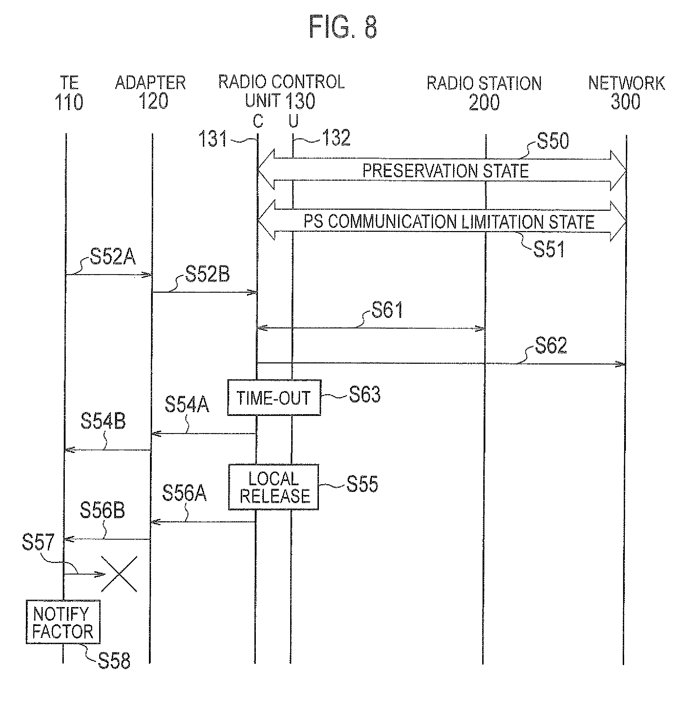

Hereinafter, the case, where it is not possible to transmit the transmission request of the user data to the network 300 when the radio control unit 130 according the first embodiment is in the Preservation state and the PS communication limitation state, will be described with reference to Fig. 8. In Fig. 8, it will be appreciated that identical step numbers are assigned to processes identical to those of Fig. 7.

As illustrated in Fig. 8, in step 61, the radio control unit 130 (the C-PLANE processing unit 131) sets the RRC connection between the terminal device 100 and the radio station 200 (RRC Connection Establishment), similarly to step 11.

In step 62, the radio control unit 130 (the C-PLANE processing unit 131) transmits a service request to the network 300 (the GGSN), similarly to step 12.

In step 63, the radio control unit 130 detects that a response for the service request could not be acquired in a predetermined time after the service request is transmitted (time-out).

In addition, in step 58, the C-PLANE processing unit 131 notifies a user of a factor (a failure factor) by which the transmission of the transmission request of the user data fails. Here, the failure factor indicates that a response for the transmission request of the user data could not be acquired in a predetermined time.

### (Rejection of transmission request)

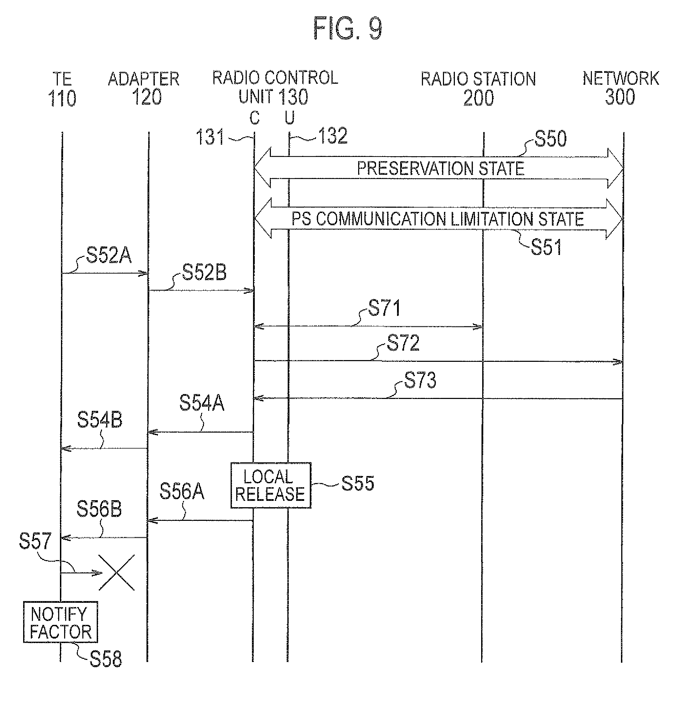

Hereinafter, the case, where it is not possible to transmit the transmission request of the user data to the network 300 in the Preservation state and the PS communication limitation state according the first embodiment, will be described with reference to Fig. 9. In Fig. 9, identical reference numerals are assigned to processes identical to those of Fig. 7. Description of the processes identical to those of Fig. 7 will be omitted.

As illustrated in Fig. 9, in step 71, the radio control unit 130 (the C-PLANE processing unit 131) sets the RRC connection between the terminal device 100 and the radio station 200 (RRC Connection Establishment), similarly to step 1.

In step 72, the radio control unit 130 (the C-PLANE processing unit 131) transmits a service request to the network 300 (the GGSN), similarly to step 12.

In step 73, the network 300 (the SGSN) transmits a rejection response for rejecting the service request to the terminal device 100.

In addition, in step 58, the C-PLANE processing unit 131 notifies a user of a factor (a failure factor) by which the transmission of the transmission request of the user data fails. Here, the failure factor indicates that a response for rejecting to transmit the user data is acquired for the transmission request of the user data.

### (Operation and Effect)

In accordance with the terminal device 100 according to the first embodiment, when the transmission of the user data fails in the preservation state, the radio control unit 130 performs the local release for releasing the PDP context in the terminal device 100. That is, when the transmission of the user data fails in the preservation state, the radio control unit 130 transits the Idle state from the Preservation state in the terminal device 100.

As described above, since the PDP context is released in the terminal device 100 and the transition to the Idle state is performed in the terminal device 100, when the user data is transmitted after the local release, it is necessary for the TE 110 to re-issue the outgoing call process. Consequently, the transmission process of the user data is prevented from being unnecessarily repeated.

### [First modification]

Hereinafter, a first modification of the first embodiment will be described with reference to the accompanying drawing. Hereinafter, the first modification will be described while focusing on the difference relative to the above-mentioned first embodiment.

Particularly not mentioned in the first embodiment, but in the first modification, it is determined whether to perform the local release in the preservation state according to the type of the network 300.

Specifically, when the transmission of the user data fails in the preservation state, the radio control unit 130 determines whether to perform the local release in the preservation state according to the type of the network 300.

For example, in the network 300 (a network in a roaming out destination), no charge occurs for a transition to the PS communication state from the preservation state. However, when charge occurs for a transition to the PS communication state from the Idle state, the radio control unit 130 determines not to perform the local release in the preservation state. Consequently, the local release is performed, so that new charge is prevented from occurring.

### [second modification]

Hereinafter, a second modification of the first embodiment will be described with reference to the accompanying drawings. Hereinafter, the first modification will be described while focusing on the difference relative to the above-mentioned first embodiment.

Particularly not mentioned in the first embodiment, but in the second modification, the transmission request of the user data is rejected in a state in which an RRC connection corresponding to an emergency call is set.

When the transmission request of the user data, which corresponds to communication transited to the preservation state, is made in the preservation state, the radio control unit 130 (the C-PLANE processing unit 131) determines whether the RRC connection corresponding to the emergency call is set as an RRC connection of another communication different from the communication transited to the preservation state.

Furthermore, when the transmission request of the user data is made in the preservation state, if it is determined that the RRC connection corresponding to the emergency call is set, the radio control unit 130 (the C-PLANE processing unit 131) rejects the transmission request of the user data corresponding to the preservation state.

In addition, when rejecting the transmission request of the user data, the radio control unit 130 (the C-PLANE processing unit 131) releases the PDP context in the terminal device 100 (local release). Thus, a transition to the Idle state from the Preservation state is performed in the terminal device 100. Here, for another communication (CS communication) different from the communication transited to the preservation state, the RRC connection corresponding to the emergency call is maintained. Furthermore, for another communication (CS communication) different from the communication transited to the preservation state, if a call is established, emergency communication is performed. Furthermore, the radio control unit 130 (the C-PLANE processing unit 131) notifies a user of a factor (a failure factor) by which the transmission of the transmission request of a user packet fails. Here, the failure factor indicates that the RRC connection corresponding to the emergency call is set as the RRC connection of another communication (CS communication) different from the communication transited to the preservation state.

Consequently, in the normal transmission and reception of user data, it is possible to prevent the RRC connection corresponding to the emergency call from being incorrectly used.

### [Other Embodiments]

The present invention is explained through the above embodiment, but it must not be understood that this invention is limited by the statements and the drawings constituting a part of this disclosure. From this disclosure, a variety of alternate embodiments, examples, and applicable techniques will become apparent to one skilled in the art.

For example, in the above-mentioned embodiments, when a transition to the PS communication state from the preservation state is performed, the setting process (step 32 of Fig. 5 and the like) of the RRC connection is performed. However, the present invention is not limited thereto. Specifically, when the CS (Circuit Switching) communication is performed, the setting process of the RRC connection may be omitted.

In the above-mentioned embodiments, the case (refer to Fig. 6 and the like) is described, in which the local release is performed in the terminal device 100 when the transmission of the user data is requested in the terminal device 100 but communication between the terminal device 100 and the network 300 is limited. However, the present invention is not limited thereto. Specifically, when modification of the PDP context (PDP Context Modify) or release of the PDP context (PDP Context Deactivate) is requested in the terminal device 100, if communication between the terminal device 100 and the network 300 is limited, the local release may be performed in the terminal device 100.

Particularly not mentioned in the above-mentioned embodiment, but at the time of the local release is performed, the network 300 does not recognize that the PDP context is released in the terminal device 100. The network 300 recognizes that the PDP context is released in the terminal device 100, based on location registration information, which is received from the terminal device 100 after the local release, and the like. Then, in the network 300, the network 300 releases the PDP context.

The entire contents of Japanese Patent Application Laid-open No. 2009-222367 (filed on September 28, 2009) are incorporated in the present specification by reference.

### INDUSTRIAL APPLICABILITY

In accordance with the present invention, it is possible to provide a terminal device and a communication method, by which it is possible to prevent the transmission process of user data from being unnecessarily repeated.

## Claims

1. A terminal device connected to a network via a radio station, comprising:
a control data processing unit configured to set a control data radio path required for transmission and reception of control data between the terminal device and the radio station, and set a user data radio path and a logical path required for transmission and reception of user data between the terminal device and the network; and
a user data processing unit configured to perform a transmission process of the user data using the logical path set by the control data processing unit, wherein
the control data processing unit performs a local release for releasing the logical path in the terminal device, when the transmission of the user data fails in a preservation state in which the logical path is maintained and the user data radio path is released.

2. The terminal device according to claim 1, further comprising:
a determination unit configured to determine whether to perform the local release according to a type of the network, wherein
the control data processing unit maintains the preservation state without performing the local release, even when the transmission of the user data fails in the preservation state, if it is determined that the local release is not performed.

3. The terminal device according to claim 1, wherein
the control data processing unit performs the local release, if a control data radio path corresponding to an emergency call is set as the control data radio path of another communication different from communication transited to the preservation state, when a transmission request of the user data is made in the preservation state.

4. A communication method, in which a terminal device is connected to a network via a radio station, comprising:
a step A of setting a control data radio path required for transmission and reception of control data between the terminal device and the radio station, and setting a user data radio path and a logical path required for transmission and reception of user data between the terminal device and the network; and
a step B of performing a local release for releasing the logical path in the terminal device, when the transmission of the user data fails in a preservation state in which the logical path is maintained and the user data radio path is released.
